# EUROPEAN PATENT SPECIFICATION

(11) **EP 0 793 888 B1**
(45) Date of publication and mention of the grant of the patent: **15.05.2002**
(21) Application number: 96928642.6
(22) Date of filing: 12.09.1996
(51) Int. Cl.: H04N 7/088

(54) **METHOD AND DEVICE FOR TRANSMITTING AND RECEIVING TELETEXT PAGES**
VERFAHREN UND VORRICHTUNG ZUM SENDEN UND EMPFANGEN VON TELETEXTSEITEN
PROCEDE ET DISPOSITIF PERMETTANT D'ENVOYER ET DE RECEVOIR DES PAGES DE TELETEXTE

(30) Priority: 25.09.1995 EP 95202582
(43) Date of publication of application: 10.09.1997
(73) Proprietor: Koninklijke Philips Electronics N.V., 5621 BA Eindhoven (NL); PHILIPS NORDEN AB, 164 85 Stockholm (SE)
(72) Inventor: VAN GESTEL, Henricus, Antonius, Wilhelmus, NL-5656 AA Eindhoven (NL)
(74) Representative: Schmitz, Herman Jan Renier
(86) International application number: IB9600937
(87) International publication number: WO9712485

(56) References cited:
- WO-A-90/13970
- WO-A-95/34993
- WO-A-96/02109
- DE-A- 3 047 597

## Description

### FIELD OF THE INVENTION

The invention relates to a method and device for receiving a teletext signal. The invention also relates to a method and device for transmitting an electronic program guide, a signal accommodating program data forming such an electronic program guide, and a storage medium on which such a signal is stored.

### BACKGROUND OF THE INVENTION

A known method of receiving teletext data is described in "World System Teletext", Technical Specification, revised March 1985, hereinafter referred to as WST specification. Said specification describes a data format of teletext pages for first-generation receivers (referred to as the Level 1 format), and a number of extensions of the Level 1 format for further facilities not yet provided for the first generation of teletext decoders.

As disclosed, inter alia, in International Patent Application WO-A-90/13970, the WST specification particularly provides extension packets or "ghost rows" (referred to like that because they are ignored by the first-generation decoders). Extension packets are teletext data packets having a row number greater than 24. One of the known extension packets is packet X/26. With the aid of this packet, inter alia, the display facilities are further enhanced, for example the assignment of special attributes such as letter type, size, color and the like to selected text items of the teletext pages.

### OBJECT AND SUMMARY OF THE INVENTION

It is an object of the invention to provide a method and arrangement for receiving a teletext signal with which further facilities are made possible.

To this end, the invention provides a method and arrangement for receiving a teletext signal as defined in claims 1 and 5, respectively. Herewith is achieved that an electronic program guide is created from text items in one or more teletext pages, in which guide the television programs are classified into categories such as themes (sports, information, entertainment), sub-themes (soccer, news, music), parental rating and the like.

It should be noted that it is known per se from European Patent Application EP-A-0 525 559 to add a classification code to a teletext signal. In this prior art document, a "Themenkennsignal" is added to a complete teletext page. The classification is used to identify teletext pages to be acquired in advance so that the waiting time for these pages can be reduced

It is envisaged that an electronic program guide (EPG) signal can also be transmitted as a dedicated signal. Such an EPG signal is a teletext-like signal, but not in its conventional form of individually accessible teletext pages. However, in practice the titles of the television programs are already transmitted in the form of regular teletext pages. The non-prepublished International Patent Application WO-A-97/12484 (PHN 15.482) in the name of Applicant describes a mechanism for providing the EPG data signal with references to these available titles. It is also an object of the invention to further improve such an electronic program guide transmission.

To this end, the invention provides a method and arrangement for transmitting an electronic program guide as defined in claims 6 and 9, respectively. Herewith is achieved that classification codes are added to the titles which are already available in the regular teletext pages.

### BRIEF DESCRIPTION OF THE FIGURES

Fig. 1 shows diagrammatically a teletext transmission system to explain the method according to the invention.

Fig. 2 shows some examples of data packets transmitted by a transmission station shown in Fig. 1.

Figs. 3 and 4 show examples of a teletext broadcast to explain the method according to the invention.

Fig. 5 shows the flow chart of a program performed by a processor shown in Fig. 1.

### DESCRIPTION OF EMBODIMENTS

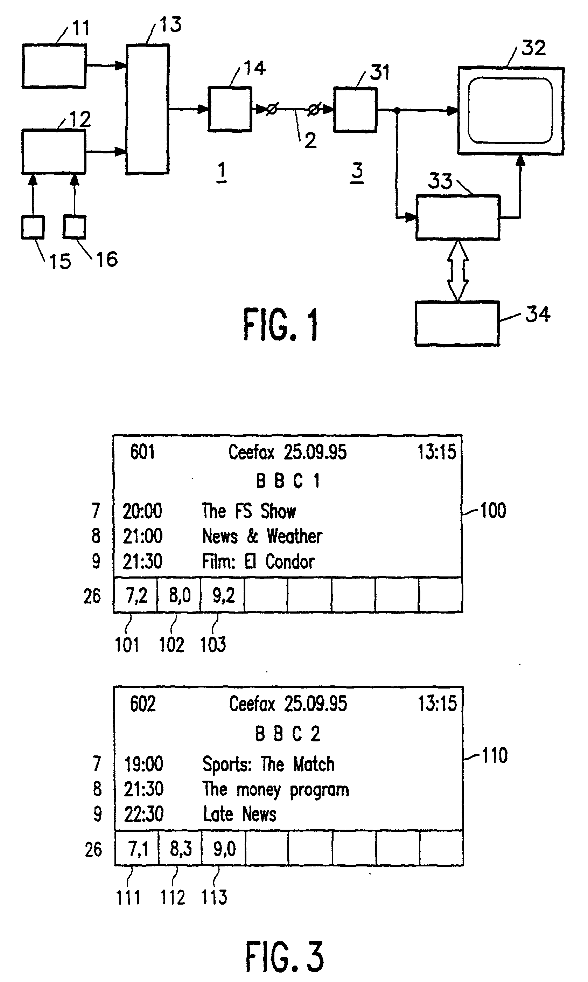

Fig. 1 shows diagrammatically a teletext transmission system to explain the method according to the invention. The system comprises a transmission station 1, a transmission medium 2 and a receiver 3. The transmission medium may alternatively be a storage medium such as a videotape on which a television signal including teletext data is stored. The transmission station comprises a television signal generator 11, a teletext signal generator 12, a teletext inserter 13 and a modulator 14. The television generator 11 generates a picture signal and the teletext generator 12 generates a teletext signal. The teletext signal comprises a "regular" teletext broadcast (with news pages, sports scores, weather forecasts, television programs). This regular teletext signal is generated in a first editing terminal 15. The teletext signal further comprises a data signal by means of which an electronic TV guide in a coded form is transmitted. This EPG data signal is composed in a second editing terminal 16.

The picture signal and the teletext signal are combined in teletext inserter 13 to a video signal which is applied to the modulator 14 and is transmitted via transmission medium 2. The receiver 3 comprises a tuner 31 for demodulating the video signal. The demodulated video signal is applied for further processing and display to a television monitor 32. The video signal is also applied to a teletext decoder 33. This decoder decodes the "regular" teletext signal accommodated therein in further known manner and displays the pages on television monitor 32. The teletext decoder also receives the EPG signal and applies this for further processing to an EPG processor 34.

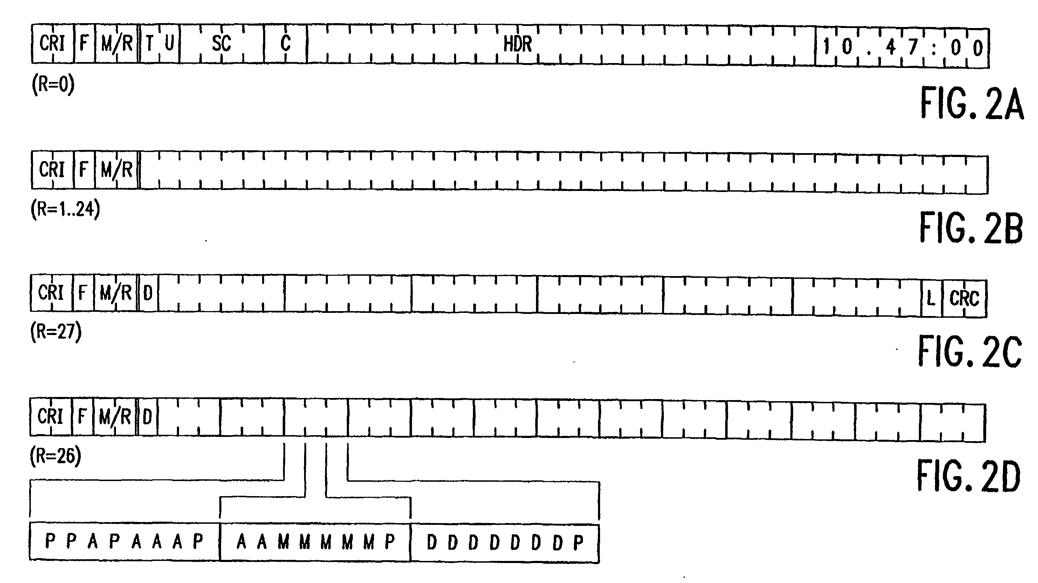

For each transmitted teletext page, the teletext signal comprises a plurality of data packets which are accommodated in further known manner in picture lines of the video signal during the picture flyback. Fig. 2 shows some possible forms of these data packets in greater detail. As has been attempted to show in this Figure, each data packet comprises 45 bytes of 8 bits each. The first 2 bytes having a fixed value 1010..10 are referred to as "clock run-in" and are denoted by CRI in the Figure. The third byte is a "framing code" F and has also a fixed value. The next 2 bytes comprise a 3-bit magazine number M and a 5-bit row number R. The significance of the other 40 bytes depends on the value of the row number R.

If the row number R has the value 0, as is assumed in Fig. 2A, the data packet constitutes a page header of a teletext page. The series of 40 bytes of such a page header starts with two digits T (tens) and U (units) of the page number, a sub-code SC and a plurality of control bits C. The remaining part comprises 24 character positions with a page header HDR and 8 character positions for displaying the current time. The transmission of a teletext page starts with, and implies, the page header of this page. The page number is constituted by the magazine number M, tens T and units U. It is a 3-digit number and is generally between 100 and 899 in order that the user can select it by means of a decimal keyboard. The sub-code SC is an extension of the page number MTU. The page header and the subsequent packets having the same magazine number M constitute the relevant page. In general, a series of teletext pages is transmitted in a repetitive cycle.

If the row number R has one of the values 1-24, as is assumed in Fig. 2B, then the 40 bytes constitute a text row of 40 characters for display on a display screen in accordance with the Level 1 display format.

If the row number R has the value 27, as is assumed in Fig. 2C, then it is a "linked page packet X/27". Such a packet starts with a 4-bit designation code D, by means of which a maximum number of 16 packets X/27 can be distinguished, and six groups of 6 bytes. In each 6-byte group, a linked page number can be coded. In this way, a plurality of other pages may be referred to from a teletext page by means of packets X/27.

Fig. 2D shows the data format of an extension packet whose row number R has the value 26. The first of the 40 data bytes is again a 4-bit designation code D, by means of which a distinction between a plurality of packets 26 is possible. The other 39 bytes are divided into 13 groups of 3 bytes each, referred to as triplets. Each triplet comprises 18 information bits and 6 parity bits for Hamming protection. The 18 information bits of each triplet are divided into a 6-bit address field, a 5-bit mode field and a 7-bit data field. In Fig. 2D, the bits of the address field are denoted by A, the bits of the mode field are denoted by M, and the bits of the data field are denoted by D, while the protection bits are denoted by P. This division of packet 26 into triplets is known per se from the WST specification.

In accordance with the invention, the significance of "classification triplet" is assigned to one of the possible values of the mode field of a triplet. In such a classification packet, the address field specifies which text item (for example, which row of the teletext page) the triplet relates to. A classification code is accommodated in the data field, for example, 0 for informative television programs, 1 for sports programs, 2 for entertainment, 3 for education, etc. If the number of bits in the data field is insufficient, more values of the mode field may be reserved.

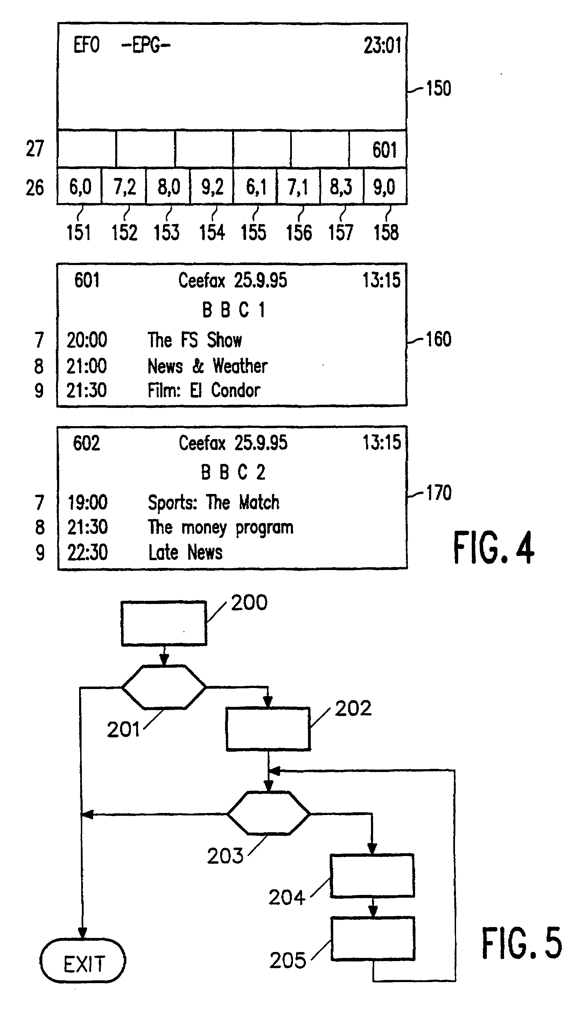

Fig. 3 shows a first example of a teletext broadcast to explain the method according to the invention. In this example, the packets X/26 with classification triplets form part of the teletext page on which the corresponding text items are mentioned. The reference numerals 100 and 110 in the Figure denote two teletext pages (pages 601 and 602) with the television program overview of the stations BBC1 and BBC2, respectively. Both pages comprise an extension packet X/26. The packet X/26 associated with page 601 comprises three classification triplets 101-103. The address field of triplet 101 has the value 7 and the data field has the value 2. This means that the television program on row 7 of the page belongs to category 2 (entertainment). Similarly, triplet 102 indicates that the program on row 8 belongs to category 0 (information). Triplet 103 indicates that the program on row 9 belongs to category 2 (entertainment). Teletext page 602 comprises classification triplets 111-113. The first triplet 111 assigns category 1 (sports) to the program on row 7, the second triplet 112 assigns category 3 (education) to the program on row 8, while in accordance with triplet 113, the program on row 9 belongs to category 0 (information).

Fig. 4 shows a second example. In this example, the classification triplets in packets X/26 form part of a separate EPG data signal. From the data in this EPG signal, reference is made to the teletext pages with the relevant text items. This method is more efficient because the EPG data signal is expected to be broadcast once or several times a day, while the regular teletext pages are repeated at a considerably higher frequency. The mechanism of page linking has been described in greater detail in the non-prepublished Patent Application PHN 15.482, so that a rough description is sufficient in this case.

In Fig. 4, the reference numeral 150 denotes an EPG page with a hexadecimal page number EFO. A series of such pages constitutes the EPG data signal with which a file of television program data (such as title and category) of various television stations is transmitted. However, the program data of BBC1 and BBC2 are not accommodated in the EPG data signal because they have already been mentioned on the regular text pages 601 and 602, respectively. To couple the program data of BB1 and BBC2 to the EPG file, EPG page 150 comprises references to the relevant regular teletext pages. More particularly, page 150 comprises a linked page packet X/27 whose sixth link refers to teletext page 601 in this example. Moreover, the EPG data signal comprises a packet X/26. The first triplet 151 in this packet is a page linking triplet (as defined by the mode field) whose address field has the value 6 and the data field has the value 0. As has been described in Patent Application PHN 15.482, this constitutes a reference to a regular teletext page whose page number has an offset 0 with respect to the sixth link in packet X/27. In this way, a reference is made to page 601+0 = 601. The next three triplets 152-154 are classification triplets. They correspond to the triplets 101-103 shown in Fig. 3. On the one hand, they define the program title because the address field comprises the relevant row number, and on the other hand, they classify the category of the program by means of the data field.

As is apparent from the mode field, the next triplet 155 is a page linking triplet again. It refers to a regular teletext page whose page number has an offset 1 with respect to the sixth link in packet X/27. In this way, a reference is made to page 601+1 = 602. The next three triplets 156-158 are classification triplets. They correspond to the triplets 111-113 in Fig. 3 and thus define the program titles and categories of the BBC2 programs.

Fig. 5 shows the flow chart of a program performed by EPG processor 34 (Fig. 1). In a step 200, the EPG data signal is received and decoded, and the decoded program data such as station, title, category, parental rating, and the like are stored in a local memory. In a step 201, it is checked whether the EPG signal comprises one or more links to regular teletext pages. If this is the case, the relevant teletext page is acquired in a step 202. In a step 203, it is checked whether the EPG data signal and/or regular teletext page comprise classification triplets. If this is the case, the address field and the data field of this triplet are decoded in a step 204. The address field is representative of a row number in the regular teletext page, and the data field represents a given category. In a step 205, the program title on the relevant row is read and added, together with the corresponding category, to the other program data in the local memory. Subsequently, the program returns to step 203 so as to check whether there are more classification triplets to be processed.

The invention may be summarized as follows. For novel media services such as the transmission of Electronic Program Guides (EPG), the use of teletext as a transmission medium is considered. It is efficient to refrain from the transmission, in the EPG signal, of those program data which are already available in regular teletext pages. The invention provides a method and device for assigning classification codes (program type, parental rating) to these programs. The classification is transmitted in the form of triplets in extension packets, for example packet X/26. The packets may form part of the regular teletext pages, but also of the EPG data signal. In the latter case, a page linking mechanism is also provided.

## Claims

1. A method of receiving a teletext signal (100; 150) to which an extension packet (X/26; X/26, X/27) is added comprising address data (101-103; X/27, 151-154) for addressing a text item in a selected teletext page (100; 160) and attribute data (101-103; 152-154) for assigning an attribute to said text item, **characterized in that** said attribute is a classification code for classifying said text item in one of a series of categories of television programs, the method comprising the steps of acquiring (202) the selected teletext page, decoding (204) the text item and classification code in said teletext page to form program data representing a television program, and adding (205) said program data to a memory in which program data representing further television programs are stored, to form an electronic program guide.

2. A method as claimed in claim 1, wherein the extension packet (X/26) is added to said selected teletext page (100).

3. A method as claimed in claim 1, wherein the extension packet (X/26) is added to a separate electronic program guide signal (150), said electronic program guide signal further comprising page link data (X/27, 151) to identify the selected teletext page (160).

4. A method as claimed in claim 1, in which the address data and classification code are received in the form of triplets with an address field, a mode field and a data field, a predetermined value of the mode field indicating that the classification code is incorporated in the data field.

5. A receiver (3) for of receiving a teletext signal (100; 150) to which an extension packet (X/26; X/26, X/27) is added comprising address data (101-103; X/27, 151-154) for addressing a text item in a selected teletext page (100; 160) and attribute data (101-103; 152-154) for assigning an attribute to said text item, **characterized in that** said attribute is a classification code for classifying said text item in one of a series of categories of television programs, the receiver comprising means (33) for acquiring the selected teletext page, decoding (34) the text item and classification code in said teletext page to form program data representing a television program, and adding (34) said program data to a memory in which program data representing further television programs are stored, to form an electronic program guide.

6. A method of transmitting an electronic program guide, comprising the steps of transmitting an electronic program guide signal (150) comprising program data representing television programs, and at least one teletext page (100; 160) comprising a text item representing a further television program not comprised in said electronic program guide signal, the electronic program guide signal including extension packets (X/26; X/26, X/27) comprising address data (101-103; X/27, 151-154) for addressing the text item in said teletext page and a classification code (101-103; 152-154) for classifying the further television program represented by said text item in one of a series of categories of television programs.

7. A method as claimed in claim 6, wherein the electronic program guide signal includes page link data (X/27, 151) to identify said teletext page.

8. A method as claimed in claim 6, in which the address data and classification code are transmitted in the form of triplets with an address field, a mode field and a data field, a predetermined value of the mode field indicating that the classification code is incorporated in the data field.

9. A transmitter (1) for transmitting an electronic program guide, comprising means (12, 15, 16) for transmitting an electronic program guide signal (150) comprising program data representing television programs, and at least one teletext page (100; 160) comprising a text item representing a further television program not comprised in said electronic program guide signal, the electronic program guide signal including extension packets (X/26; X/26, X/27) comprising address data (101-103; X/27, 151-154) for addressing the text item in said teletext page and a classification code (101-103; 152-154) for classifying the further television program represented by said text item in one of a series of categories of television programs.

10. A signal representing an electronic program guide, comprising an electronic program guide signal (150) comprising program data representing television programs, and at least one teletext page (100; 160) comprising a text item representing a further television program not comprised in said electronic program guide signal, the electronic program guide signal including extension packets (X/26; X/26, X/27) comprising address data (101-103; X/27, 151-154) for addressing the text item in said teletext page and a classification code (101-103; 152-154) for classifying the further television program represented by said text item in one of a series of categories of television programs.

11. A signal as claimed in claim 10, wherein the electronic program guide signal includes page link data (X/27, 151) to identify said teletext page.

12. A signal as claimed in claim 10, in which the address data and classification code form triplets with an address field, a mode field and a data field, a predetermined value of the mode field indicating that the classification code is incorporated in the data field.

13. A storage medium on which a signal as claimed in any one of claims 10-12 is stored.

## Patentansprüche

1. Verfahren zum Empfangen eines Teletextsignals (100; 150), dem ein Erweiterungspaket (X/26; X/26, X/27) hinzugefügt worden ist, das Adressendaten (101-103; X/27, 151-154) zum Adressieren eines Textitems in einer selektierten Teletextseite (100; 160) und Attributdaten (101-103; 152-154) zum Zuordnen eines Attributs zu dem genannten Textitem, **dadurch gekennzeichnet, dass** das genannte Attribut ein Klassifikationscode ist zum Klassifizieren des genannten Textitems in einer Kategorie einer Reihe von Kategorien von Fernsehprogrammen, wobei das Verfahren die nachfolgenden Verfahrensschritte umfasst: das Auffordern (202) der selektierten Teletextseite, das Decodieren (204) des Textitems und des Klassifikationscodes in der genannten Teletextseite zum Bilden von Programmdaten, die ein Fernsehprogramm darstellen, und das Hinzufügen (205) der genannten Programmdaten zu einem Speicher, in dem Programmdaten, die weitere Fernsehprogramme darstellen, gespeichert werden zum Bilden einer elektronischen Programmzeitung.

2. Verfahren nach Anspruch 1, wobei das Erweiterungspaket (X/26) zu der genannten selektierten Teletextseite (100) hinzugefügt wird.

3. Verfahren nach Anspruch 1, wobei das Erweiterungspaket (X/26) zu einem einzelnen Signal mit einer elektronischen Programmzeitung (150) hinzugefügt wird, wobei dieses Signal mit einer elektronischen Programmzeitung weiterhin Seitenkoppeldaten (X/27, 151) umfasst zum Identifizieren der selektierten Teletextseite (160).

4. Verfahren nach Anspruch 1, wobei die Adressendaten und der Klassifikationscode in Form von Triplets mit einem Adressenfeld, einem Modefeld und einem Datenfeld empfangen werden, wobei ein vorbestimmter Wert des Modefeldes angibt, dass der Klassifikationscode in dem Datenfeld untergebracht ist.

5. Empfänger (3) zum Empfangen eines Teletextsignals (100; 150), dem ein Erweiterungspaket (X/26; X/26, X/27) hinzugefügt wird mit Adressendaten (101-103; X/27, 151-154) zum Adressieren eines Textitems in einer selektierten Teletextseite (100; 160) und mit Attributdaten (101-103; 152-154) zum Zuordnen eines Attributs zu dem genannten Textitem, **dadurch gekennzeichnet, dass** das genannte Attribut ein Klassifikationscode ist zum Klassifizieren des genannten Textitems in einer Kategorie einer Reihen von Kategorien von Fernsehprogrammen, wobei der Empfänger Mittel (33) aufweist zum Anfordern der selektierten Teletextseite, zum Decodieren (34) des Textitems und des Klassifikationscodes in der genannten Teletextseite zum Bilden von Programmdaten, die ein Fernsehprogramm darstellen, und zum Hinzufügen (34) der genannten Programmdaten zu einem Speicher, in dem Programmdaten, die weitere Fernsehprogramme darstellen, gespeichert werden zum Bilden einer elektronischen Programmzeitung.

6. Verfahren zum Übertragen einer elektronischen Programmzeitung, wobei dieses Verfahren die nachfolgenden Verfahrensschritte umfasst: das Übertragen eines Signals (150) mit der elektronischen Programmzeitung, wobei dieses Signal Programmdaten aufweist, die Fernsehprogramme Darstellen, und das Übertragen wenigstens einer Teletextseite (100; 160) mit einem Textitem, das ein weiteres Fernsehprogramm darstelle, das nicht in dem Signal mit der genannten elektronischen Programmzeitung enthalten ist, wobei dieses Signal mit der elektronischen Programmzeitung Erweiterungspakete (X/26; X/26, X/27) aufweist, die Adressendaten (101-103; X/27, 151-154) umfasst zum Adressieren des Textitems in der genannten Teletextseite und einen Klassifikationscode (101-103; 152-154) zum Klassifizieren des weiteren Fernsehprogramms, das durch das genannte Textitem in einer Kategorie einer Reihe von Kategorien von Fernsehprogrammen dargestellt wird.

7. Verfahren nach Anspruch 6, wobei das Signal mit der elektronischen Programmzeitung Seitenkoppeldaten (X/27. 151) umfasst zum Identifizieren der genannten Teletextseite.

8. Verfahren nach Anspruch 6, wobei die Adressendaten und der Klassifikationscode in Form von Triplets mit einem Adressenfeld, einem Modefeld und einem Datenfeld übertragen werden, wobei ein vorbestimmter Wert des Modefeldes angibt, dass der Klassifikationscode in dem Datenfeld untergebracht ist.

9. Sender (1) zum Übertragen einer elektronischen Programmzeitung, mit Mitteln (12, 15, 16) zum Übertragen eines Signals mit der elektronischen Programmzeitung (150) mit Programmdaten, die Fernsehprogramme darstellen, und zum Übertragen wenigstens einer Teletextseite (100; 160) mit einem Textitem, das ein weiteres Fernsehprogramm darstellt, das nicht in dem genannten Signal mit der elektronischen Programmzeitung enthalten ist, wobei das betreffende Signal Erweiterungspakete (X/26; X/26, X/27) enthält, die Adressendaten (101-103; X/27, 151-154) enthalten zum Adressieren des Textitems in der genannten Teletextseite und einen Klassifikationscode (101-103; 152-154) zum Klassifizieren des weiteren Fernsehprogramms, dargestellt durch das genannte Textitem in einer Kategorie einer Reihen von Kategorien von Fernsehprogrammen.

10. Signal, das eine elektronische Programmzeitung darstellt, das ein Signal (150) mit einer elektronischen Programmzeitung enthält, das Programmdaten umfasst, die Fernsehprogramme darstellen, und das wenigstens eine Teletextseite (100; 160) enthält, das ein Textitem umfasst, das ein weiteres Fernsehprogramm darstellt, das nicht in dem genannten Signal mit der elektronischen Programmzeitung vorhanden ist, wobei dieses Signal Erweiterungspakete (X/26; X/26, X/27) umfasst, die Adressendaten (101-103; X/27, 151-154) enthalten zum Adressieren des Textitems in der genannten Teletextseite und einen Klassifikationscode (101-103; 152-154) zum Klassifizieren des weiteren Fernsehprogramms, dargestellt durch das genannte Textitem in einer Kategorie einer Reihen von Kategorien von Fernsehprogrammen.

11. Signal nach Anspruch 10, wobei das Signal mit der elektronischen Programmzeitung Seitenkoppeldaten (X/27, 151) umfasst zum Identifizieren der genannten Teletextseite.

12. Signal nach Anspruch 10, wobei die Adressendaten und der Klassifikationscode Triplets mit einem Adressenfeld, einem Modefeld und einem Datenfeld bilden, wobei ein vorbestimmter Wert des Modefeldes angibt, dass der Klassifikationscode in dem Datenfeld untergebracht ist.

13. Speichermittel, auf dem ein Signal nach einem der Ansprüche 10-12 gespeichert wird.

## Revendications

1. Procédé pour recevoir un signal de télétexte (100;150) auquel un paquet d'extension (X/26; X/26, X/27) est ajouté, comprenant des données d'adresse (101-103; X/27, 151-154) pour adresser un élément de texte dans une page de télétexte sélectionnée (100; 160) et des données d'attribution (101-103; 152-154) pour affecter un attribut audit élément de texte,
**caractérisé en ce que** ledit attribut est un code de classification pour classifier ledit élément de texte dans une catégorie d'une série de catégories de programmes de télévision comprenant les étapes suivantes : acquérir (202) la page de télétexte sélectionnée, décoder (204) l'élément de texte et le code de classification dans ladite page de télétexte pour former des données de programmes représentant un programme de télévision, et ajouter (205) lesdites données de programmes à une mémoire dans laquelle des données de programmes représentant d'autres programmes de télévision sont stockées, pour former un guide électronique de programmes.

2. Procédé suivant la revendication 1, dans lequel le paquet d'extension (X/26) est ajouté à ladite page de télétexte sélectionnée (100).

3. Procédé suivant la revendication 1, dans lequel le paquet d'extension (X/26) est ajouté à un signal séparé de guide électronique de programmes (150), ledit signal de guide électronique de programmes comprenant en outre des données de lien de page (X/27, 151) pour identifier la page de télétexte sélectionnée (160).

4. Procédé suivant la revendication 1, dans lequel les données d'adresse et le code de classification sont reçus sous forme de triplets avec un champ d'adresse, un champ de mode et un champ de données, une valeur prédéterminée du champ de mode indiquant que le code de classification est inclus dans le champ de données.

5. Récepteur (3) pour recevoir un signal de télétexte (100; 150) auquel un paquet d'extension (X/26; X/26, X/27) est ajouté, comprenant des données d'adresse (101-103; X/27, 151-154) pour adresser un élément de texte dans une page de télétexte sélectionnée (100; 160) et des données d'attribut (101-103; 152-154) pour affecter un attribut audit élément de texte,
**caractérisé en ce que** ledit attribut est un code de classification pour classifier ledit élément de texte dans une catégorie d'une série de catégories de programmes de télévision, le récepteur comprenant un moyen pour acquérir (33) la page de télétexte sélectionnée, décoder (34) l'élément de texte et le code de classification dans ladite page de télétexte pour former des données de programmes représentant un programme de télévision, et ajouter (34) lesdites données de programme à une mémoire dans laquelle les données de programme représentant d'autres programmes de télévision sont stockées, pour former un guide électronique de programmes.

6. Procédé pour transmettre un guide électronique de programmes, comprenant l'étape de transmission d'un signal de guide électronique de programmes (150) comprenant des données de programmes représentant des programmes de télévision, et au moins une page de télétexte (100; 160) comprenant un élément de texte représentant un autre programme de télévision non compris dans ledit signal de guide électronique de programmes, le signal de guide électronique de programmes comprenant des paquets d'extension (X/26; X/26, X/27) comprenant des données d'adresse (101-103; X/27, 151-154) pour adresser l'élément de texte dans ladite page de télétexte et un code de classification (101-103; 152-154) pour classifier l'autre programme de télévision représenté par ledit élément de texte dans une catégorie d'une série de catégories de programmes de télévision.

7. Procédé suivant la revendication 6, dans lequel le signal de guide électronique de programmes comprend des données de lien de page (X/27, 151) pour identifier ladite page de télétexte.

8. Procédé suivant la revendication 6, dans lequel les données d'adresse et le code de classification sont transmis sous la forme de triplets avec un champ d'adresse, un champ de mode et un champ de données, une valeur prédéterminée du champ de mode indiquant que le code de classification est inclus dans le champ de données.

9. Emetteur (1) pour transmettre un guide électronique de programmes, comprenant des moyens (12, 15, 16) pour transmettre un signal de guide électronique de programmes (150) comprenant des données de programmes représentant des programmes de télévision, et au moins une page de télétexte (100; 160) comprenant un élément de texte représentant un autre programme de télévision non compris dans ledit signal de guide électronique de programmes, le signal de guide électronique de programmes comprenant des paquets d'extension (X/26; X/26, X/27) comprenant des données d'adresse (101-103; X/27, 151-154) pour adresser l'élément de texte dans ladite page de télétexte et un code de classification (101-103; 152-154) pour classifier l'autre programme de télévision représenté par ledit élément de texte dans une catégorie d'une série de catégories de programmes de télévision.

10. Signal représentant un guide électronique de programmes, comprenant un signal de guide électronique de programmes (150) comprenant des données de programmes représentant des programmes de télévision, et au moins une page de télétexte (100; 160) comprenant un élément de texte représentant un autre programme de télévision non compris dans ledit signal de guide de programmes, le signal de guide électronique de programmes comprenant des paquets d'extension (X/26; X/26, X/27) comprenant des données d'adresse (101-103; X/27, 151-154) pour adresser l'élément de texte dans ladite page de télétexte et un code de classification (101-103; 152-154) pour classifier l'autre programme de télévision représenté par ledit élément de texte dans une catégorie d'une série de catégories de programmes de télévision.

11. Signal suivant la revendication 10, dans lequel le signal de guide électronique de programmes comprend des données de lien de page (X/27, 151) pour identifier ladite page de télétexte.

12. Signal suivant la revendication 10, dans lequel les données d'adresse et le code de classification forment des triplets avec un champ d'adresse, un champ de mode et un champ de données, une valeur prédéterminée du champ de mode indiquant que le code de classification est inclus dans le champ de données.

13. Support d'informations sur lequel un signal tel que revendiqué dans l'une quelconque des revendications 10-12 est stocké.
